(19) Europäisches Patentamt
European Patent Office
Office européen des brevets

(11) **EP 2 735 086 B1**

(12) **EUROPÄISCHE PATENTSCHRIFT**

(45) Veröffentlichungstag und Bekanntmachung des Hinweises auf die Patenterteilung:
**13.11.2019   Patentblatt 2019/46**

(21) Anmeldenummer: **12740485.3**

(22) Anmeldetag: **12.07.2012**

(51) Int Cl.:
***H02K 1/28*** *(2006.01)*

(86) Internationale Anmeldenummer:
**PCT/EP2012/002930**

(87) Internationale Veröffentlichungsnummer:
**WO 2013/013778 (31.01.2013 Gazette 2013/05)**

(54) **INNENLÄUFERMOTOR**

INTERNAL ROTOR MOTOR

MOTEUR A INDUIT INTERNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.07.2011   DE 102011108677**

(43) Veröffentlichungstag der Anmeldung:
**28.05.2014   Patentblatt 2014/22**

(73) Patentinhaber: **ebm-papst St. Georgen GmbH & Co. KG**
**78112 St. Georgen (DE)**

(72) Erfinder:
• **FALK, Dominik**
**78087 Mönchweiler (DE)**
• **SCHULDE, Arnold**
**78054 VS-Schwenningen (DE)**
• **MOINI, Mojtaba**
**72024 Tübingen (DE)**

(74) Vertreter: **Staeger & Sperling Partnerschaftsgesellschaft mbB**
**Sonnenstraße 19**
**80331 München (DE)**

(56) Entgegenhaltungen:
**EP-A1- 0 286 905          WO-A1-00/28642**
**DE-A1-102008 034 422     DE-A1-102009 054 995**
**US-A- 5 986 366**

**Beschreibung**

Die Erfindung betrifft einen Innenläufermotor, und insbesondere einen elektronisch kommutierten Innenläufermotor.

Ein solcher Motor hat einen Rotor, meist in Form eines Rotorblechpakets, in welches Dauermagnete eingebettet sind. Dieser Rotor ist mit einer Welle verbunden, damit in dem Verbund zwischen Welle und Rotor ein Drehmoment übertragen werden kann.

Falls die Welle direkt in den Rotor eingepresst wird, können bei der Herstellung zu hohe Einpresskräfte eintreten, welche zum einen den Rotor beschädigen oder zerstören und welche auch zu einer Beschädigung der Welle führen können, weil letztere durch eine zu hohe Knickbelastung verbogen werden kann und folglich zu Ausschuss führt.

Aus der DE 10 2006 037 804 A1 von ebm-papst kennt man einen Innenläufermotor mit einer Hohlwelle, an deren Außenseite zur Verbindung mit dem Rotor Kerben vorgesehen sind. Diese reduzieren die Flächenpressung an der Welle, und dadurch treten bei der Montage der Welle, welche auch als "Fügeprozess" oder "Fügevorgang" bezeichnet wird, geringere Einpresskräfte auf. Jedoch können als Folge der reduzierten Flächenpressung Späne von der Welle abgeschoben werden und am Rotor hängen bleiben. Hierbei kann eine Kaltverschweißung zwischen Rotor und Welle auftreten. Auch spielt hierbei die Härtepaarung von Welle einerseits und Rotor andererseits eine Rolle, und diese kann sich sehr negativ auf die Einpresskräfte auswirken.

Es ist nicht möglich, die Härtepaarung zwischen Rotor einerseits und Welle andererseits durch Auslegung der Materialien genau zu bestimmen, da die Härtewerte von Elektroblech stark schwanken. Somit bestehen bei Verwendung einer Kerbverbindung zwei Probleme:

- Späne in der Verbindung
- nicht prozesssicherer Fügevorgang durch Härteschwankungen der Materialien zueinander.

Die DE 10 2008 034 422 A1 zeigt einen Rotor für einen elektronisch kommutierten Motor, welcher einen Rotorkern aus einer Vielzahl ringscheibenförmiger, längs der Rotorachse aufeinander gestapelter Lamellen aus weichferromagnetischem Material und eine sich längs einer Rotorachse erstreckende Rotorwelle aufweist. Um die Lamellen herum sind Dauermagnete mit Hilfe eines aus Kunststoff gespritzten Trägerkörpers befestigt. Am inneren Umfangsrand der Lamellen sind nach innen gerichtete Kontaktvorsprünge vorgesehen, deren radial innere Kanten eine Anlagefläche an der Rotorwelle definieren. Zwischen den Kontaktvorsprüngen ist der zentrale Durchbruch über die dort vorgesehenen Ausnehmungen erweitert. Zur Herstellung des Rotorkern werden die Lamellen aufeinander gestapelt, wobei die Lamellen bezüglich der Rotorachse nacheinander jeweils um eine Teilung weiter gedreht werden

Die EP 0 286 905 A1 zeigt einen elektronisch kommutierten Gleichstrommotor mit einem Ständer und einem Läufer. Der Läufer hat eine Welle, einen mehrpolig magnetisierten permanentmagnetischen Körper und einen inneren magnetischen Rückschluss mit nierenförmigen Ausnehmungen.

Es ist deshalb eine Aufgabe der Erfindung, einen neuen Innenläufermotor bereit zu stellen.

Nach der Erfindung wird diese Aufgabe gelöst durch einen Innenläufermotor gemäß Anspruch 1. Bei der neuen Verbindung zwischen Rotor und Welle besteht deshalb nur eine sehr geringe Gefahr der Spanbildung beim Fügeprozess. Die Geometrie des Rotorblechpakets (Zahngeometrie) kann so optimiert werden, dass eine ideale Ein- sowie Auspresskraft und ein ideales Drehmoment besteht und die Verbindung nicht wesentlich auf Härteunterschiede zwischen Rotorblechpaket und Welle reagiert, also anders als bei Verwendung einer Kerbverbindung. Die neuartige Verbindung hat den Vorteil, dass keine aufwändigen zusätzlichen Prozesse bei der Herstellung der Welle benötigt werden, also z. B. keine Herstellung von Kerben in der Welle. Es besteht ein reproduzierbarer Kraft-Weg-Verlauf, und anhand dieses Verlaufs können genaue Analysen der Verbindung gemacht werden. Es handelt sich also um eine prozesssichere Verbindung.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den Unteransprüchen. Es zeigt:

Fig. 1   einen schematischen Schnitt durch einen beispielhaften Innenläufermotor, dessen Rotor durch eingebettete Dauermagnete erregt ist; der Schnitt verläuft senkrecht zur Rotorwelle,

Fig. 2   eine vergrößerte Darstellung der Einzelheit II der Fig. 1,

Fig. 3   die schematische Darstellung eines Rotorblechs und der Lage der eingebetteten Dauermagneten relativ zu diesem Rotorblech,

Fig. 4   eine raumbildliche Darstellung der Welle und des Rotorblechpakets vor ihrem Zusammenbau,

Fig. 5            eine vergrößerte Darstellung der Einzelheit V der Fig. 4,

Fig. 6            eine vergrößerte Darstellung der Einzelheit VI der Fig. 4 und

Fig. 7            eine vergrößerte Darstellung der Einzelheit VII der Fig. 4.

Fig. 8 und Fig. 9    eine vergrößerte Darstellung einer dreiphasigen Dreieck-Reihenschaltung, und

Fig. 10 und 11      die Darstellung einer dreiphasigen Dreieck-Parallelschaltung.

In den nachfolgenden Zeichnungen werden gleiche oder gleich wirkende Teile mit denselben Bezugszeichen bezeichnet und jeweils nur einmal beschrieben. Begriffe wie oben, unten, links, rechts, beziehen sich auf die jeweilige Zeichnungsfigur.

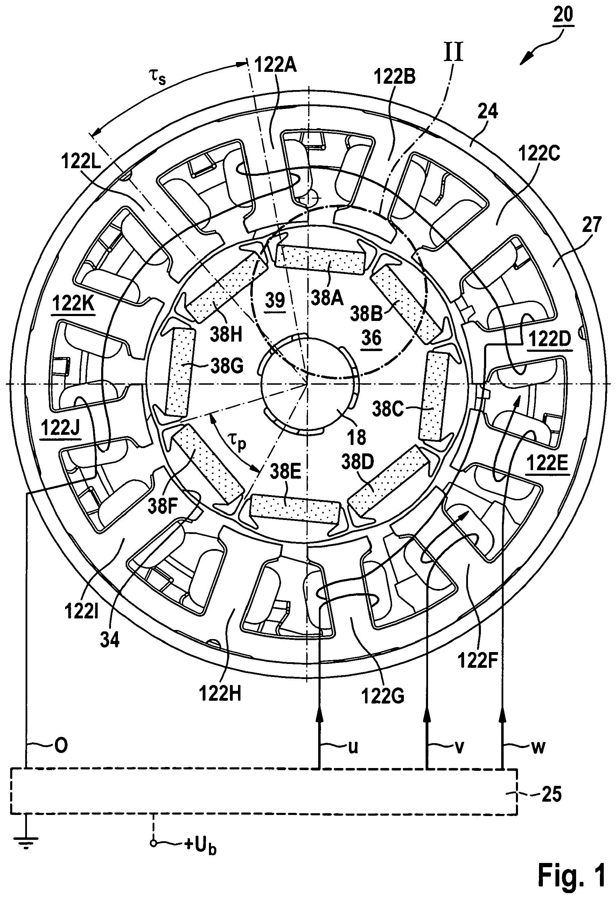

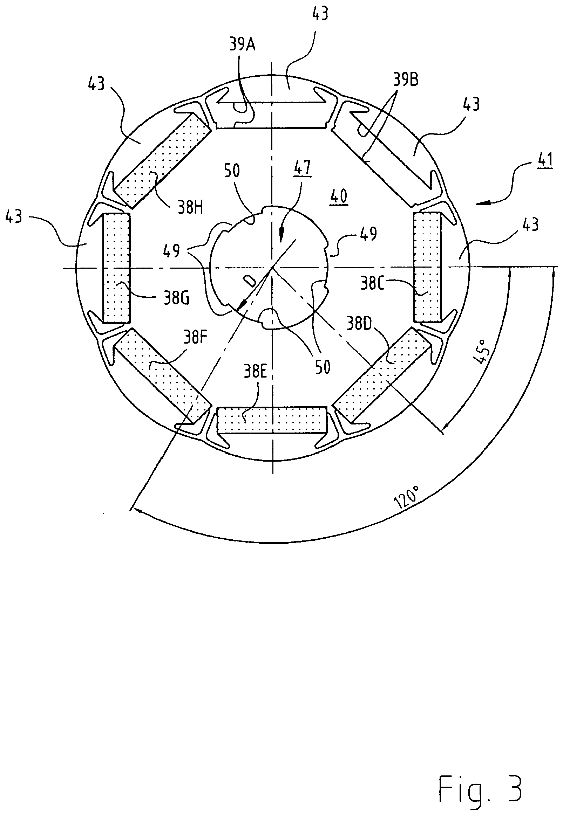

**Fig. 1** zeigt in schematischer Darstellung einen senkrecht zu einer Welle 18 verlaufenden Querschnitt durch einen dreiphasigen Innenläufermotor 20 mit einem mantelförmigen Gehäuse 24. In diesem ist ein Blechpaket 27 eines Außenstators 28 angeordnet. Letzterer hat eine Innenausnehmung 34, in der ein achtpoliger Innenrotor 36 mit einem Blechpaket 37 aus (in Fig. 3 schematisch dargestellten) Rotorblechen 41 und mit insgesamt acht Permanentmagneten 38A bis 38H (vgl. Fig. 1 bis Fig. 3) auf der Welle 18 angeordnet ist. Ein magnetisch wirksamer Luftspalt 32 trennt den Stator 28 vom Rotor 36. Ein solcher Motor kann in verschiedener Weise bezeichnet werden, z.B. als permanent erregte Synchron-Innenläufermaschine, oder als elektronisch kommutierter Sinusmotor, oder einfach als dreiphasiger Motor. Seine Stromversorgung kann z.B. aus einem Drehstromnetz erfolgen, oder durch einen geeigneten dreiphasigen Wechselrichter 25, der in Fig. 1 beispielhaft angedeutet ist.

Bei einer möglichen Verwendung eines Motors 20 nach der vorliegenden Anmeldung dient dieser in einem Kraftfahrzeug zur Einsparung von Kraftstoff.

Wenn ein Kraftfahrzeug auf einer Autobahn fährt, sind die Lenkkräfte sehr niedrig, und man braucht dann keine Lenkunterstützung, d.h. der Motor 20 kann abgeschaltet sein.

Wenn das Fahrzeug aber geparkt werden soll, ist eine Lenkunterstützung wünschenswert. Dazu muss der Motor 20 für die Lenkunterstützung bei Bedarf sehr rasch und zuverlässig starten, und besonders bei extrem niedrigen Temperaturen muss dieser Motor 20 kurzzeitig ein sehr hohes Drehmoment vom Rotor 36 über die Welle 18 auf die (nicht dargestellte) Servounterstützung der Lenkung übertragen.

Dazu muss die Verbindung zwischen Rotor 36 und Welle 18 sehr zuverlässig sein, darf aber andererseits nicht dazu führen, dass der Rotor 36 oder die Welle 18 bei der Herstellung beschädigt oder zerstört wird. Auch soll eine solche Verbindung preiswert in der Herstellung sein.

**Fig. 3** zeigt eines der Rotorbleche 41. Diese Bleche haben im Allgemeinen eine Dicke von < 1 mm, z. B. 0,3 mm. Sie sind im vorliegenden Beispiel für den gesamten Rotor 36 weitgehend einheitlich, werden aber auf verschiedene Weise verwendet, vgl. die nachfolgende Beschreibung.

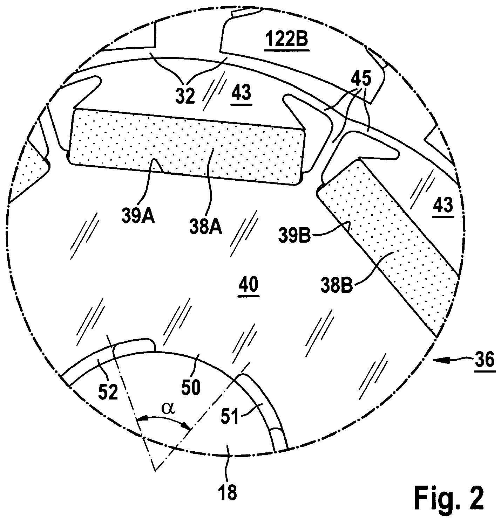

Fig. 3 zeigt - nur zum besseren Verständnis - die Lage der Rotormagnete 38C bis 38H beim fertigen Rotor 36. Es wird aber ausdrücklich darauf hingewiesen, dass die einzelnen Rotorbleche 41 nur Ausnehmungen 39 für die Aufnahme der Rotormagnete 38A bis 38H haben, und dass die Magnete erst eingesetzt werden, wenn das Rotorblechpaket 37 mit der Welle 18 "verheiratet" ist. Fig. 3 zeigt beispielhaft zwei leere Ausnehmungen 39A und 39B, in welchen beim fertigen Rotor 36 die Magnete 38A und 38B befestigt sind, vgl. Fig. 1 und **Fig. 2.**

Die Ausnehmungen 39A, 39B sind radial nach innen begrenzt durch den magnetischen Rückschluss (yoke) 40, der in der nachfolgend beschriebenen Weise mechanisch mit der Welle 18 verbunden ist, vgl. Fig. 2. Nach außen sind die Ausnehmungen 39A, 39B begrenzt durch Polschuhe 43, die über dünne Verbindungen 45 (Fig. 2) aus Rotorblech in der dargestellten Weise mechanisch mit dem Rückschluss 40 verbunden sind. Diese dünnen Verbindungen 45 werden durch den Fluss der Magnete 38A bis 39H gesättigt, haben also nur eine mechanische Funktion. Bei der Herstellung des Rotors 36 werden die Magnete 38A, 38B in die Hohlräume 39A, 39B etc eingeschoben, und dort in geeigneter Weise arretiert, wie das dem Fachmann bekannt ist.

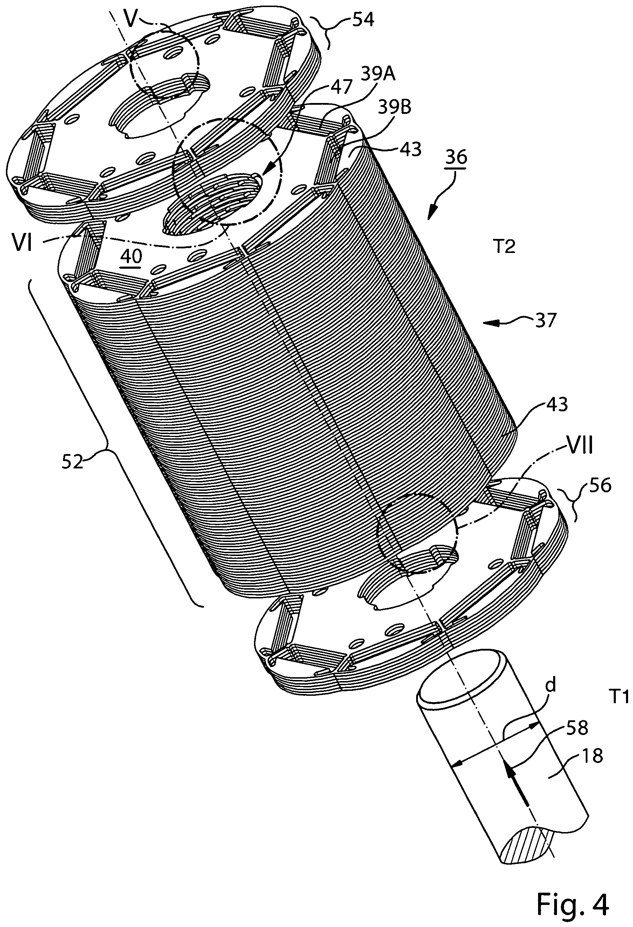

Wie Fig. 3 zeigt, hat ein Rotorblech 41 jeweils eine zentrale Ausnehmung 47. Diese hat radial nach innen ragende Vorsprünge 49, die innen durch kreisförmige Abschnitte 50 berandet sind, deren effektiver Durchmesser D geringfügig größer ist als der Durchmesser d (Fig. 4) der Welle 18, welch letztere in die Vorsprünge 49 eingepresst wird. Dabei ist es von Vorteil, wenn die Vorsprünge 49 in gleichem Winkelabstand voneinander in der Ausnehmung 47 vorgesehen werden, wobei eine Zahl von drei Vorsprüngen besonders vorteilhaft ist. Die Breite der Vorsprünge 49 wird gewöhnlich empirisch bestimmt.

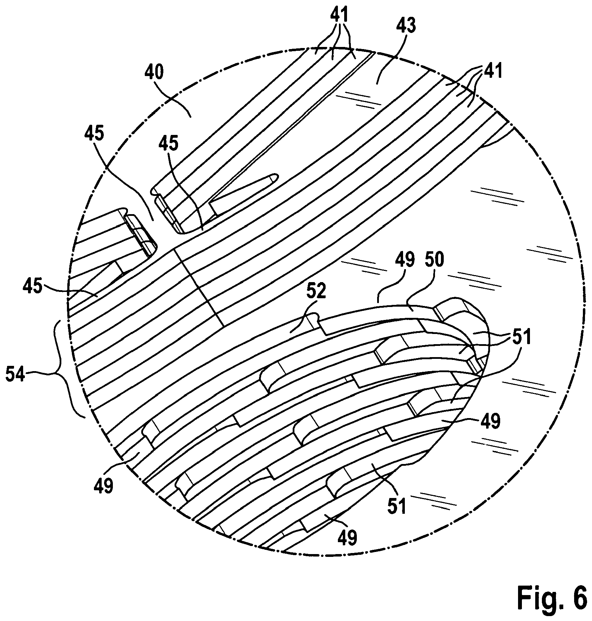

Wie die **Fig. 4** und **Fig. 6** zeigen, sind im - axial gesehen - zentralen Bereich 52 des Rotorblechpakets 37 aufeinander folgende Rotorbleche 41 um eine Rotorpolteilung $\tau_p$ gegeneinander versetzt. Da Fig. 3 einen achtpoligen Rotor 36 zeigt, gilt:

$$\tau_p = 360\,° / 8 = 45\,°,$$

wie in Fig. 3 angegeben.

Bei einem Motor mit 6 Rotorpolen würde die Versetzung $\tau_p$ dementsprechend betragen:

$$\tau_p = 360\,° / 6 = 60\,°.$$

Durch die Versetzung ergibt sich dann das Bild gemäß Fig. 6, d. h. die Vorsprünge 49 sind um eine Rotorpolteilung $\tau_p$ gegeneinander versetzt, und zwischen ihnen befinden sich Lücken 51, die keine direkte Verbindung mit der Welle 18 haben.

**Fig. 4** zeigt das Rotorblechpaket 37 vor dem Einpressen der Welle 18 und in einer Explosionsdarstellung. Das Blechpaket 37 hat, wie beschrieben, einen zentralen Bereich 52, in welchem die Rotorbleche 41 jeweils um eine Rotor-Polteilung $\tau_{pe}$ gegeneinander versetzt sind, damit die Welle 18 (Fig. 1, Fig. 2, Fig. 4) genau in der Mitte der zentralen Ausnehmung 47 befestigt ist und keine hohen Kosten für die Beseitigung von Unwuchten entstehen.

An beiden Enden des zentralen Blechpaketbereichs 52 sind kurze Blechpakete 54 (Fig. 4, oben) und 56 (Fig. 4, unten) angeordnet, die bei Fig. 4 beispielhaft jeweils aus n + 1 Blechen 41 bestehen, die nicht gegeneinander versetzt sind, wobei n eine natürliche Zahl ist. Gewöhnlich hat ein solches Kurzpaket 2 bis 10 Bleche.

Diese Kurzpakete 54, 56 dienen dazu, das Einpressen der Welle 18 zu erleichtern. Die Einpressrichtung der Welle 18 ist in Fig. 4 mit 58 bezeichnet und verläuft entlang der Achse des Rotors, und das Kurzpaket 56 dient dazu, einen günstigen Wert für die Einpresskraft zu erhalten. Ebenso dient das Kurzpaket 54 dazu, eine günstige Auspresskraft zu erhalten, die naturgemäß nicht zu hoch sein darf, damit die Rotorbleche 41 nicht verbogen werden.

Bei der beschriebenen Art der Verbindung zwischen Rotorblechpaket 52, 54, 56 und der Welle 18 entfällt die Gefahr einer Spanbildung weitgehend. Man kann die Zahngeometrie des Rotorblechpakets 52 so optimieren, dass sich günstige Werte für die Einpresskraft, die Auspresskraft, und das übertragbare Drehmoment ergeben, und dass die Verbindung nicht auf Härteunterschiede zwischen den Blechpaketen 52, 54, 56 einerseits und der Welle 18 andererseits reagiert. Auch werden keine aufwändigen zusätzlichen Prozesse bei der Herstellung der Welle 18 benötigt. Es ergibt sich ein reproduzierbarer Kraft-Weg-Verlauf, und anhand dieses Verlaufs kann man genaue Analysen der Verbindung machen. Die Verbindung ist prozesssicher, und bei richtiger Auslegung der Überpressung, also des "Übermaßes" der Welle 18, bekommt man, wie beschrieben, eine niedere Streuung der Einpresswerte, die eine sichere Fertigung ermöglicht.

Beim Einpressen der Welle 18 können die Temperatur T1 der Welle 18 und die Temperatur T2 des Rotorblechpakets 37 gleich sein (T1 = T2). Es kann aber alternativ auch eine unterschiedliche Temperatur (T1 ≠ T2) gewählt werden, wobei die Temperatur T1 der Welle 18 bevorzugt geringer ist als die Temperatur T2 des Rotorblechpakets 37 (T1 < T2). Relativ hat die Welle 18 durch die niedrigere Temperatur einen etwas geringeren (Außen-)Durchmesser d, und das Rotorblechpaket 37 durch die höhere Temperatur einen etwas größeren (Innen-)Durchmesser D (vgl. Fig. 3). Hierdurch wird beim Einpressen der Welle 18 die Reibung zwischen der Welle 18 und dem Rotorblechpaket 37 reduziert, wodurch die Montage erleichtert wird. Vorteilhaft ist, dass bei einer Montage mit einer Temperaturdifferenz (T1 < T2) die Differenz zwischen dem effektiven Durchmesser D (Fig. 3) des Rotorblechpakets 37 und dem effektiven Durchmesser d (Fig. 4) der Welle 18 etwas größer gewählt werden kann als bei einer Montage mit gleicher Temperatur der Bauteile. Hierdurch ist in Kombination mit den ersten Abschnitten 50 eine noch bessere Verbindung möglich, ohne dass beim Einpressen die Gefahr einer Zerstörung der ersten Abschnitte 50 des Blechpakets 37 besteht. Bevorzugt ist bei einem Einpressen mit unterschiedlichen Temperaturen T1, T2 der durch die ersten Abschnitte 50 definierte Innendurchmesser D der zentralen Ausnehmung 47 so viel kleiner als der Außendurchmesser d der Welle 18, dass ein zerstörungsfreies Einpressen der Welle 18 nur möglich ist, wenn die Temperatur der Welle 18 beim Einpressen kleiner als die Temperatur des Rotorblechpakets ist. Die unterschiedlichen Temperaturen T1, T2 können aber auch in Fällen vorteilhaft sein, in denen ein Einpressen mit gleichen Temperaturen T1, T2 möglich ist.

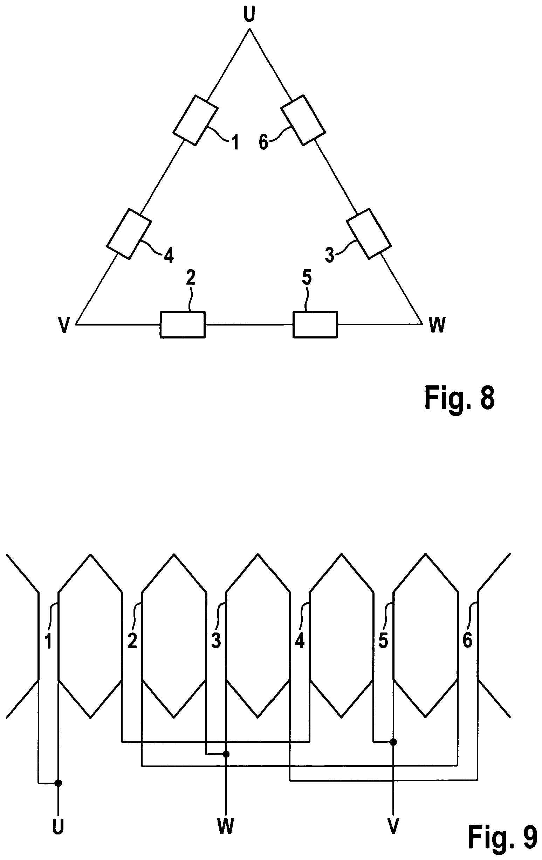

Die **Fig. 8** bis **Fig. 11** zeigen in der üblichen Darstellungsweise des Elektromaschinenbaus verschiedene Arten, wie in Fig. 1 die Spulen verschaltet werden können.

Fig. 1 zeigt eine Sternschaltung als Reihenschaltung.

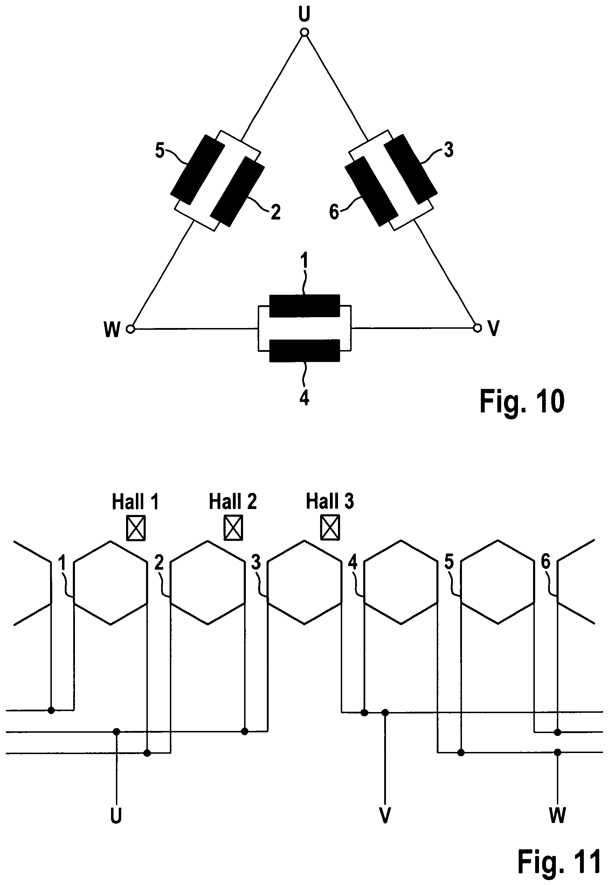

Ebenso ist eine Sternschaltung als Parallelschaltung möglich. Die Fig. 8 und Fig. 9 zeigen als weitere Beispiele eine Dreieck-Reihenschaltung, und die Fig. 10 und Fig. 11 zeigen eine Dreieck-Parallelschaltung.

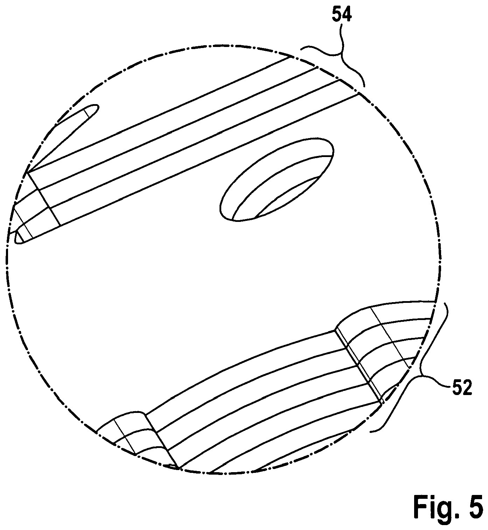

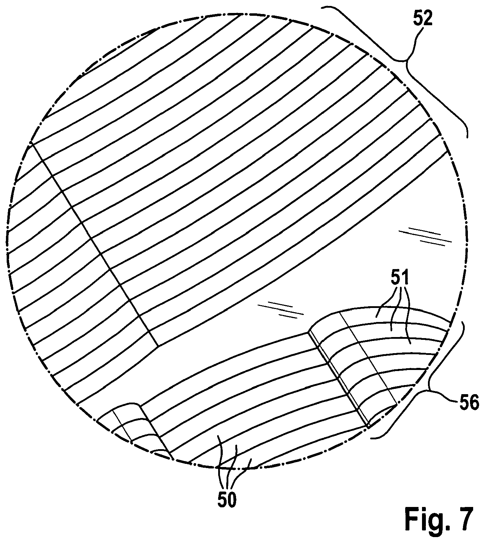

Fig. 1 bis Fig. 11 zeigen einen Innenläufermotor, insbesondere einen elektronisch kommutierten Innenläufermotor, welcher aufweist: Einen mehrpoligen Stator 28, ein relativ zu diesem Stator drehbar gelagertes Rotorblechpaket 37; 52, 54, 56, eine im Rotorblechpaket vorgesehene zentrale Ausnehmung 47, wobei das Rotorblechpaket Einzelbleche 41 aufweist, deren zentrale Ausnehmungen 47 radial innere erste Abschnitte 50 aufweisen, in welchen eine Welle 18 eingepresst ist, und diese zentralen Ausnehmungen 47 in den Bereichen zwischen den radial inneren ersten Abschnitten 50 zweite Abschnitte 51 aufweisen, die im montierten Zustand von der Außenseite der Welle 18 beabstandet sind, wobei mindestens ein Teil der Einzelbleche 41 des Rotorblechpakets 52 winkelversetzt zueinander angeordnet ist.

Bevorzugt ist mindestens ein Teil der Einzelbleche 41 des Rotorblechpakets 52 überlappend relativ zueinander angeordnet.

Bevorzugt ist an mindestens einem Ende 52A, 52B des Rotorblechpakets eine vorgegebene Zahl von Einzelblechen 41 nicht winkelversetzt zueinander angeordnet, wobei die vorgegebene Zahl bevorzugt im Bereich von 2 bis 10 liegt.

Bevorzugt sind im Rotorblechpaket 52, 54, 56 Ausnehmungen 39A, 39B vorgesehen, welche zur Aufnahme von Dauermagneten 38A, 38B ausgebildet sind, wobei weiter bevorzugt die Winkellage der radial inneren ersten Abschnitte zur Winkellage der Ausnehmungen 39A, 39B, ... für die Aufnahme der eingebetteten Dauermagnete 38A, 38B so gewählt ist, dass sich im Rotorblechpaket 52, 52A, 52B durchgängige Ausnehmungen 39A, 39B zur Aufnahme der Dauermagnete 38A, 38B, ... ergeben.

Bevorzugt ist ein Einzelblech 41 des Rotorblechpakets 52 relativ zu einem zu ihm benachbarten Einzelblech 41 um einen Winkel versetzt, der n * τp beträgt, wobei n = 1, 2, 3 ... und τp = Polteilung der Rotorpole.

Bevorzugt weisen die ersten Abschnitte 50 eine im Wesentlichen identische Winkelerstreckung auf.

Bevorzugt weisen die ersten Abschnitte 50 eine kleinere Winkelerstreckung auf als die zweiten Abschnitte 51.

Bevorzugt addieren sich erste und zweite Abschnitte zu einer Winkelerstreckung von 120° mechanisch.

Bevorzugt sind die Einzelbleche 41 des Rotorblechpakets 37; 52, 54, 56 einheitlich ausgebildet.

Naturgemäß sind im Rahmen der vorliegenden Erfindung vielfache Abweichungen und Modifikationen möglich.

## Patentansprüche

1.   Innenläufermotor, insbesondere elektronisch kommutierter Innenläufermotor, welcher aufweist:

Einen mehrpoligen Stator (28);
ein relativ zu diesem Stator drehbar gelagertes Rotorblechpaket (37; 52, 54, 56);
eine im Rotorblechpaket vorgesehene zentrale Ausnehmung (47), in welche eine Welle (18) eingepresst ist, wobei das Rotorblechpaket Einzelbleche (41) aufweist, deren zentrale Ausnehmungen (47) radial innere erste Abschnitte (50) aufweisen und diese zentralen Ausnehmungen (47) in den Bereichen zwischen den radial inneren ersten Abschnitten (50) zweite Abschnitte (51) aufweisen, die im montierten Zustand von der Außenseite der Welle (18) beabstandet sind, wobei mindestens ein Teil der Einzelbleche (41) des Rotorblechpakets (52) winkelversetzt zueinander angeordnet ist, **dadurch gekennzeichnet, dass** an mindestens einem Ende (52A, 52B) des Rotorblechpakets eine vorgegebene Zahl von Einzelblechen (41) nicht winkelversetzt zueinander angeordnet ist.

2.   Motor nach Anspruch 1, bei welchem die Einzelbleche (41) drei erste Abschnitte (50) aufweisen.

3.   Motor nach einem der vorhergehenden Ansprüche, bei welchem im Rotorblechpaket (52, 54, 56) Ausnehmungen (39A, 39B) vorgesehen sind, welche zur Aufnahme von Dauermagneten (38A, 38B) ausgebildet sind.

4.   Motor nach Anspruch 3, bei welchem die Einzelbleche (41) einen magnetischen Rückschluss aufweisen, der mechanisch mit der Welle (18) verbunden ist, und der die Ausnehmungen (39A, 39B, ...) radial nach innen begrenzt, bei welchem die Einzelbleche (41) Polschuhe (43) aufweisen, welche Polschuhe (43) die Ausnehmungen (39A, 39B, ...) nach außen begrenzen,
und bei welchem die Einzelbleche (41) dünne Verbindungen (45) aus Rotorblech aufweisen, über welche die Polschuhe (43) mechanisch mit dem Rückschluss (40) verbunden sind
und welche durch den Fluss der Magnete (38A - 39H) gesättigt werden, also nur eine mechanische Funktion haben.

5.   Motor nach einem der vorhergehenden Ansprüche, bei welchem die vorgegebene Zahl im Bereich von 2 bis 10 liegt.

6.   Motor nach Anspruch 3, bei welchem die Winkellage der radial inneren ersten Abschnitte (50) zur Winkellage der Ausnehmungen (39A, 39B, ...) für die Aufnahme der eingebetteten Dauermagnete (38A, 38B) so gewählt ist, dass sich im Rotorblechpaket (52, 52A, 52B) durchgängige Ausnehmungen (39A, 39B) zur Aufnahme der Dauermagnete (38A, 38B, ...) ergeben.

7.   Motor nach Anspruch 6, bei welchem in den durchgängigen Ausnehmungen (39A, 39B, ...) zur Aufnahme der Dauermagnete (38A, 38B, ...) jeweils ein Dauermagnet (38A, 38B, ...) eingesetzt ist,
wobei die Magnete erst eingesetzt werden, wenn das Rotorblechpaket (37) mit der Welle (18) "verheiratet" ist.

8. Motor nach einem der vorhergehenden Ansprüche, bei welchem ein erstes Einzelblech (41) des Rotorblechpakets (52) relativ zu einem zu ihm benachbarten zweiten Einzelblech (41) um einen Winkel versetzt ist, der n * $\tau_p$ beträgt, wobei n = 1, 2, 3 ...
und
$\tau_p$ = Polteilung der Rotorpole

9. Motor nach Anspruch 8, bei welchem die ersten Abschnitte (50) des ersten Einzelblechs (41) durch die Versetzung relativ zu dem ihm benachbarten zweiten Einzelblech (41) winkelversetzt zu den ersten Abschnitten (50) des zweiten Einzelblechs (41) angeordnet sind.

10. Motor nach einem der vorhergehenden Ansprüche, bei welchem die ersten Abschnitte (50) eine im Wesentlichen identische Winkelerstreckung aufweisen.

11. Motor nach einem der vorhergehenden Ansprüche, bei welchem die ersten Abschnitte (50) eine kleinere Winkelerstreckung aufweisen als die zweiten Abschnitte (51).

12. Motor nach Anspruch 10 oder 11, bei welchem sich ein erster Abschnitt (50) und ein zweiter Abschnitt (51) jeweils zu einer Winkelerstreckung von 120° mech. addieren.

13. Motor nach einem der vorhergehenden Ansprüche, bei welchem die Einzelbleche (41) des Rotorblechpakets (37; 52, 54, 56) einheitlich ausgebildet sind.

**Claims**

1. Internal rotor motor, in particular electronically commutated internal rotor motor, comprising:

   A multipole stator (28);
   a laminated rotor core (37; 52, 54, 56) pivoted relative to said stator;
   a central recess (47) provided in the laminated rotor core and into which a shaft (18) is pressed,
   wherein said laminated rotor core comprises single sheets (41) having central recesses (47) comprising radially inner first sections (50), and said central recesses (47) having second sections (51) in the regions between said radially inner first sections (50), said second sections (51) being spaced apart from the outside of said shaft (18) in the mounted state,
   wherein at least a part of said single sheets (41) of said laminated rotor core (52) is arranged angularly offset to each other, and
   wherein at least at one end (52A, 528) of the laminated rotor core, a predetermined number of single sheets (41) is not arranged angularly offset to each other.

2. Motor according to claim 1, wherein said individual sheets (41) have three first sections (50).

3. Motor according to one of the preceding claims, wherein recesses (39A, 39B) are provided in said laminated rotor core (52, 54, 56), said recesses (39A, 39B) being formed to receive permanent magnets (38A, 38B).

4. Motor according to claim 3,
   wherein said individual sheets (41) have a magnetic return path mechanically connected to said shaft (18) and radially inwardly limiting said recesses (39A, 39B, ...),
   wherein said individual sheets (41) have pole shoes (43), said pole shoes (43) outwardly limiting said recesses (39A, 39B, ...),
   and wherein said individual sheets (41) have connections (45), said connections (45) mechanically connecting said pole shoes (43) to said return path (40) and being saturated by the flux of the magnet, thus having only one mechanical function.

5. Motor according to one of the preceding claims, wherein said predetermined number ranges from 2 to 10.

6.  Motor according to Claim 3, wherein said angular position of said radially inner first sections (50) in relation to the angular position of said recesses (39A, 39B, ...) for receiving said embedded permanent magnets (38A, 38B) is selected such that continuous recesses (39A, 39B) for receiving said permanent magnets (38A, 38B, ...) are formed in said laminated rotor core (52, 52A, 52B).

7.  Motor according to claim 6, wherein respectively one permanent magnet (38A, 38B, ...) is inserted in said continuous recesses (39A, 39B, ...) for receiving said permanent magnets (38A, 38B, ...), wherein the magnets are not inserted until the laminated rotor core (37) is coupled to the shaft (18).

8.  Motor according to one of the preceding claims, wherein a first single sheet (41) of the laminated rotor core (52) is offset relative to an adjacent second single sheet (41) by an angle of n * tp, wherein
    n : 1, 2, 3
    and
    rp = pole pitch of the rotor poles.

9.  Motor according to claim 8, wherein said first sections (50) of said first single sheet (41) are disposed angularly offset from said first sections (50) of said second single sheet (41) by displacement relative to said second single sheet (41) adjacent to said first single sheet (50).

10. Motor according to one of the preceding claims, wherein said first sections (50) have a substantially identical angular extension.

11. Motor according to one of the preceding claims, wherein said first sections (50) have a smaller angular extension than said second sections (51).

12. Motor according to claim 10 or 11, wherein a first section (50) and a second section (51) respectively add up to an angular extension of 120° mech.

13. Motor according to one of the preceding claims, wherein said individual sheets (41) of said laminated rotor package (37; 52, 54, 56) are formed uniformly.


**Revendications**

1.  Moteur à induit interne, en particulier moteur à induit interne commuté électroniquement lequel présente :

    un stator multipolaire (28) ;
    un paquet de tôles de rotor (37 ; 52, 54, 56) logé en rotation par rapport à ce stator ;
    un évidement central (47) prévu dans le paquet de tôles de rotor, dans lequel un arbre (18) est enfoncé, dans lequel le paquet de tôles de rotor présente des tôles individuelles (41), dont les évidements centraux (47) présentent des premières sections radialement internes (50) et ces évidements centraux (47) présentent dans les zones entre les premières sections radialement internes (50) des deuxièmes sections (51), qui sont espacées à l'état monté du côté extérieur de l'arbre (18),
    dans lequel au moins une partie des tôles individuelles (41) du paquet de tôles de rotor (52) est agencée décalée angulairement l'une par rapport à l'autre, **caractérisé en ce que**
    un nombre prédéfini de tôles individuelles (41) ne sont pas agencées décalées angulairement l'une par rapport à l'autre à au moins une extrémité (52A, 52B) du paquet de tôles de rotor.

2.  Moteur selon la revendication 1, dans lequel les tôles individuelles (41) présentent trois premières sections (50).

3.  Moteur selon l'une quelconque des revendications précédentes, dans lequel des évidements (39A, 39B), lesquels sont réalisés pour la réception d'aimants permanents (38A, 38B), sont prévus dans le paquet de tôles de rotor (52, 54, 56).

4.  Moteur selon la revendication 3,
    dans lequel les tôles individuelles (41) présentent une culasse magnétique qui est reliée mécaniquement à l'arbre (18), et qui délimite les évidements (39A, 39B, ...) radialement vers l'intérieur,
    dans lequel les tôles individuelles (41) présentent des pièces polaires (43), lesquelles pièces polaires (43) délimitent les évidements (39A, 39B, ...) vers l'extérieur,
et dans lequel les tôles individuelles (41) présentent des liaisons minces (45) en tôle de rotor, par le biais desquelles les pièces polaires (43) sont reliées mécaniquement à la culasse (40) et lesquelles sont saturées par le flux des aimants (38A - 39H), n'ont donc qu'une fonction magnétique.

5. Moteur selon l'une quelconque des revendications précédentes, dans lequel le nombre prédéfini se situe dans la plage de 2 à 10.

6. Moteur selon la revendication 3, dans lequel la position angulaire des premières sections radialement internes (50) par rapport à la position angulaire des évidements (39A, 39B, ...) pour la réception des aimants permanents intégrés (38A, 38B) est sélectionnée de sorte qu'il en résulte des évidements traversants (39A, 39B) dans le paquet de tôles de rotor (52, 52A, 52B) pour la réception des aimants permanents (38A, 38B, ...).

7. Moteur selon la revendication 6, dans lequel respectivement un aimant permanent (38A, 38B, ...) est inséré dans les évidements traversants (39A, 39B, ...) pour la réception des aimants permanents (38A, 38B, ...),
dans lequel les aimants ne sont insérés que lorsque le paquet de tôles de rotor (37) est « marié » avec l'arbre (18).

8. Moteur selon l'une quelconque des revendications précédentes, dans lequel une première tôle individuelle (41) du paquet de tôles de rotor (52) est décalée par rapport à une deuxième tôle individuelle (41) qui lui est adjacente d'un angle, qui est de n * $T_p$, dans lequel
n = 1, 2, 3 ...
et
$T_p \pm$ le pas polaire des pôles de rotor.

9. Moteur selon la revendication 8, dans lequel les premières sections (50) de la première tôle individuelle (41) par le décalage par rapport à la deuxième tôle individuelle (41) qui lui est adjacente sont agencées décalées angulairement par rapport aux premières sections (50) de la deuxième tôle individuelle (41).

10. Moteur selon l'une quelconque des revendications précédentes, dans lequel les premières sections (50) présentent une extension angulaire sensiblement identique.

11. Moteur selon l'une quelconque des revendications précédentes, dans lequel les premières sections (50) présentent une plus petite extension angulaire que les deuxièmes sections (51).

12. Moteur selon la revendication 10 ou 11, dans lequel une première section (50) et une deuxième section (51) s'additionnent respectivement en une extension angulaire de 120 méc.°

13. Moteur selon l'une quelconque des revendications précédentes, dans lequel les tôles individuelles (41) du paquet de tôles de rotor (37; 52, 54, 56) sont réalisées uniformément.

Fig. 1

Fig. 2

Fig. 3

Fig. 4

Fig. 5

Fig. 6

Fig. 7

**Fig. 8**

**Fig. 9**

**Fig. 10**

**Fig. 11**

**EP 2 735 086 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006037804 A1
- DE 102008034422 A1
- EP 0286905 A1